# EUROPEAN PATENT APPLICATION

(11) **EP 3 866 302 A1**
(43) Date of publication of application: **18.08.2021**
(21) Application number: 20157049.6
(22) Date of filing: 13.02.2020
(51) Int. Cl.: H02J 7/34, H02M 1/36

(54) **METHOD AND ARRANGEMENT FOR CHARGING CAPACITIVE CIRCUIT**

(71) Applicant: ABB Schweiz AG, 5400 Baden (CH)
(72) Inventor: Juvonen, Linda, 00380 Helsinki (FI); Hellberg, Janne, 00380 Helsinki (FI); Koivula, Ville, 00380 Helsinki (FI)
(74) Representative: Kolster Oy Ab

(57) **Abstract**

A method and an arrangement for charging a capacitive circuit connected to an electric power converter (10), the arrangement comprising charging means (R1, R2, S3) configured to provide a charging current to the capacitive circuit (C), and control means (100) configured to detect, during the charging, a first value and a second value of a charging current of the capacitive circuit (C) or a quantity indicative thereof, such that the second value is detected after a predetermined period of time from the detecting of the first value, compare the second value with the first value; and control the charging means (R1, R2, S3) to stop the charging of the capacitive circuit (C) in response to the first value and the second value differing from each other by less than a predetermined current difference threshold.

## Description

### FIELD

The present invention relates to a method and arrangement for charging a capacitive circuit connected to an electric power converter.

### BACKGROUND

An electric power converter, such as an inverter, a rectifier or a combined rectifier/inverter, may have a capacitive circuit connected thereto. One example is a capacitive circuit connected between DC poles of an electric power converter. The capacitive circuit may comprise one or more capacitors, for example.

The capacitive circuit connected to the electric power converter may need to be charged before actual power conversion by the electric power converter is started in order to avoid a current surge upon the start, for example. Such a current surge might trigger the protection of the system, or otherwise disturb or damage the system, for example. Accordingly, such charging of the capacitive circuit connected to the electric power converter may be part of a starting procedure of the electric power converter, for instance. The capacitive circuit connected to the electric power converter may be charged to or close to a normal operating value thereof, for instance, in order to avoid or at least reduce the potential current surge.

The charging of the capacitive circuit connected to the electric power converter may be implemented by means of current limiting charging resistors from an AC power source, such as an AC network, or from a DC power source, such as a DC network. Alternatively, the charging circuit may be implemented by means of one or more controllable semiconductor switches with which the charging current may be limited by suitable switching of the one or more controllable semiconductor switches.

A problem related to such charging of the capacitive circuit connected to the electric power converter is that if there is a fault, such as a short circuit, in the electric power converter or in capacitive circuit connected to the electric power converter, the maximum charging current, as allowed by the current limiting charging resistors or semiconductors, may continue to flow for an extended period of time. This in turn may cause overheating of system components and thus further damage, for example. Also possible fuse protection in the charging circuit may not operate, at least not fast enough, when the fuses are dimensioned for the maximum charging current.

### BRIEF DESCRIPTION

An object of the present invention is thus to provide a method and an apparatus for implementing the method so as to overcome the above problems or at least to alleviate them. The objects of the invention are achieved by a method, an arrangement, and an electric power converter, which are characterized by what is stated in the independent claims. The preferred embodiments of the invention are disclosed in the dependent claims.

The invention is based on the idea of detecting, during the charging of the capacitive circuit, a first value and a second value of a charging current of the capacitive circuit, or a quantity indicative thereof, and stopping the charging of the capacitive circuit in response to the first value and the second value differing from each other by less than a predetermined current difference threshold.

An advantage of the solution of the invention is that the charging of the capacitive circuit can be interrupted if the charging current of the capacitive circuit does not decrease during the charging at a predetermined rate, which indicates a fault condition in the system.

### BRIEF DESCRIPTION OF THE DRAWINGS

In the following the invention will be described in greater detail by means of preferred embodiments with reference to the attached drawings, in which
Figure 1 shows a circuit diagram of a converter system according to an embodiment;
Figure 2 shows a circuit diagram of a converter system according to an embodiment;
Figure 3 shows a circuit diagram of a converter system according to an embodiment; and
Figure 4 shows a flow chart according to an embodiment.

### DETAILED DESCRIPTION

The application of the various embodiments is not restricted to any specific system, but it may be applied to various converter systems. In addition, the use of the embodiments is not restricted to any system utilizing a specific basic frequency or to any specific voltage level, for example.

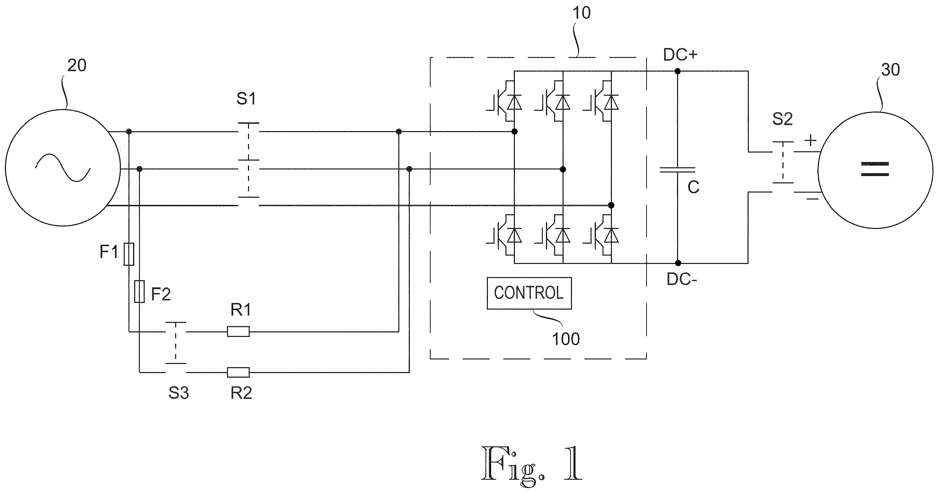

Figure 1 shows an exemplary circuit diagram of a main circuit of a converter system according to an embodiment. It should be noted that the figure merely illustrates components necessary for understanding the embodiment. The number of various components may vary from that shown in the figure. The exemplary converter is a three-phase converter 10 that can function both as a rectifier and as an inverter, i.e., it is able to rectify alternating current (AC) into direct current (DC) and convert direct current into alternating current depending on its mode of operation. The exemplary three-phase converter 10 has three AC poles and two DC poles. An example of such a three-phase rectifier/inverter 10 is a semiconductor bridge implemented by means of six controllable semiconductor switches as illustrated in the example of Figure 1. Each of the six controllable semiconductor switches has an antiparallel diode connected across the switch as also illustrated in the example of Figure 1. The controllable semiconductor switches may be transistors, such as IGBTs (Insulated-gate Bipolar Transistor) or FETs (Field-Effect Transistor), or any other controllable semiconductor switches, for instance. The circuit configuration of the converter 10 may vary and the converter 10 may generally be any kind of electric power converter comprising an inverter and/or a rectifier. Herein term 'inverter' generally refers to an electronic device or circuitry that is able to convert direct current to alternating current, and term 'rectifier' generally refers to an electronic device or circuitry that is able to convert alternating current to direct current. Moreover, instead of three phases, the converter 10 could have another number of AC phases, e.g. one, two or six.

The exemplary circuit diagram of Figure 1 further shows a capacitive circuit C connected between the DC poles DC+, DC- of the converter 10. The capacitive circuit C may comprise one or more capacitors. In case the capacitive circuit C comprises two or more capacitors, such capacitors may be connected in series and/or in parallel with each other, for instance. The capacitive circuit C, or at least a part thereof, could be located within the converter 10, e.g. within a common housing with the semiconductor bridge, or be a separate element. Another example of a possible capacitive circuit connected to the converter 10 is an AC filter (not shown in the figures) with capacitive components, such as an LCL filter, for example. In the exemplary circuit diagram of Figure 1, such AC filter could be connected to the AC poles of the converter 10 between switch S1 and the converter 10, for instance.

The exemplary circuit diagram of Figure 1 further shows an AC system 20 and a DC system 30. The AC system 20 may comprise one or more AC loads and/or one or more AC power sources. The AC system 20 may further comprise one or more AC power networks, such as an electrical grid, between such one or more AC loads and/or AC power sources. In a similar manner, the DC system 30 may comprise one or more DC loads and/or one or more DC power sources. The DC system 30 may further comprise one or more DC power networks between such one or more DC loads and/or DC power sources. An example of a DC power source is a photovoltaic panel or an array of two or more photovoltaic panels. Other types of DC power sources can also be utilized. Moreover, the DC system 30 could be connected to further AC systems via a further converter(s). As an example, the DC system 30 could constitute a DC intermediate circuit of one or more frequency converters. The exemplary circuit diagram of Figure 1 further shows a first switch S1 between the AC poles of the converter 10 and the AC system 20, which enables the AC poles of the converter 10 to be connected to or disconnected from the AC system 20. The exemplary circuit diagram of Figure 1 further shows a second switch S2 between the DC poles of the converter 10 and the DC system 30, which enables the DC poles of the converter 10 to be connected to or disconnected from the DC system 30. The switches S1, S2 may be electromechanical switches, such as contactors, or controllable semiconductor switches, for example. The switches S1, S2 may be separate devices, as shown, or part of the converter 10, i.e. situated within the housing of the converter 10, for example.

During normal operation of the converter 10, the controllable semiconductor switches thereof may be controlled in a suitable manner so as to rectify alternating current into direct current or to convert direct current into alternating current, depending on which direction electric power is to be transmitted, i.e. from the DC system 30 to the AC system 20 or vice versa. A suitable modulation scheme, such as pulse width modulation (PWM), may be utilized, for example. Figure 1 further shows a control arrangement 100 of the converter 10, which control arrangement 100 can control the controllable semiconductor switches of the converter 10 and thus the operation of the exemplary converter 10, for example. Any control connections between the control arrangement 100 and the controllable semiconductor switches of the converter 10 are not shown for the sake of clarity. The control arrangement 100 can also be configured to control other operations of the converter 10. The control arrangement 100 may perform measurements of and/or receive input signals regarding various quantities in order to perform the control of the converter 10, for example. Possible additional measuring arrangements for any such quantities are not shown in the figure for the sake of clarity. The control arrangement 100 can further be configured to control switches S1 and S2 in order to be able connect and disconnect the converter 10 to and from the AC system 20 and the DC system 30, for example.

The exemplary circuit diagram of Figure 1 further comprises a charging arrangement for charging a capacitive circuit connected to the electric power converter 10. The capacitive circuit to be charged may be e.g. the capacitive circuit C connected between the DC poles DC+, DC- of the converter 10 and/or a capacitive circuit connected of a possible AC filter connected to the AC poles of the converter 10 between the first switch S1 and the converter 10, for instance. Such a charging arrangement may be implemented by means of charging resistors by using one or more of the phases of the AC system 20. The example of Figure 1 shows two charging resistors R1, R2, which may be connected between the AC system 20 and the converter 10 by using switch S3. Switch S3 may be an electromechanical switch or a controllable semiconductor switch, for example. As a result, the capacitive circuit C connected between the DC poles DC+, DC- of the converter 10 may be charged via the charging resistors R1, R2 before the main switch S1 between the AC system 20 and the converter 10 is closed, i.e. controlled to a conducting state provided that there is AC power available from the AC system 20. Alternatively, such a charging arrangement could be implemented even without charging resistors with controllable semiconductor switches with which the charging current may be controlled, e.g. limited, with suitable switching thereof. Also other kinds of current limiting element(s) could be used in the charging arrangement. The charging arrangement may further comprise fuses F1, F2 for protection as illustrated in the example. In the example of Figure 1, the diodes of the converter 10 may act as a rectifier for the charging current provided via the charging resistors R1, R2 thus generating a DC charging current for the capacitive circuit C connected between the DC poles DC+, DC- of the converter 10. The control arrangement 100 of the converter 10 may be configured to control switch S3 in order to be able to control the charging. The charging arrangement may be a separate circuit, as illustrated, or a part of the converter 10 and situated within the housing of the converter 10, for example.

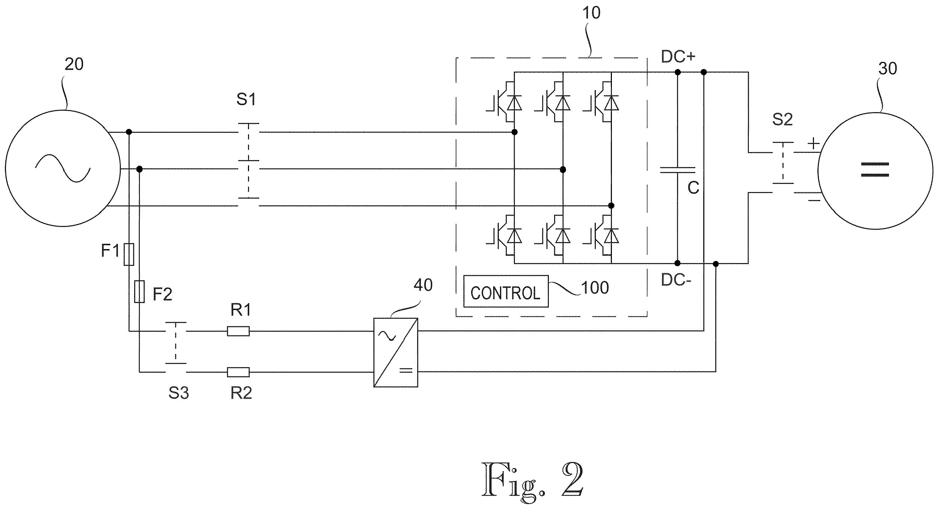

Figure 2 shows an exemplary circuit diagram of a main circuit of a converter system according to an embodiment. In the example of Figure 2, the charging arrangement otherwise corresponds to that of Figure 1 but comprises an additional dedicated rectifier 40 connected between the two charging resistors R1, R2 of the charging arrangement and the DC poles DC+, DC- of the converter 10. Thus, in this alternative, the additional rectifier 40 rectifies the charging current provided via the charging resistors R1, R2 and thus generates the DC charging current for the capacitive circuit C connected between the DC poles DC+, DC- of the converter 10. Hence, in this example the main circuit of converter 10 needs not to be used during the charging event.

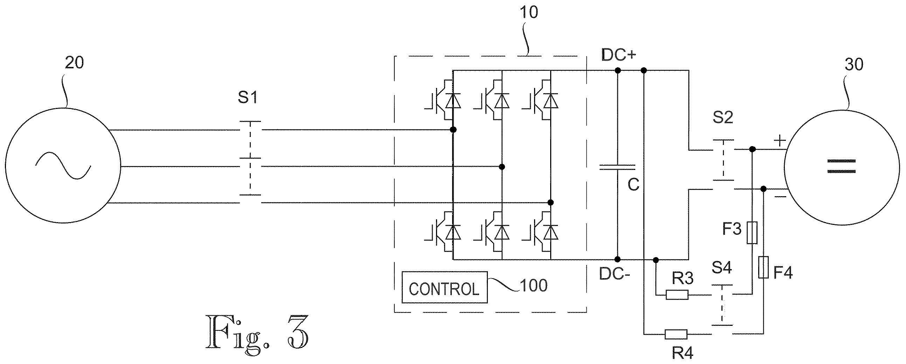

Figure 3 shows an exemplary circuit diagram of a main circuit of a converter system according to an embodiment. In the example of Figure 3, the charging arrangement is implemented as a DC charging circuit enabling the charging of e.g. the capacitive circuit C connected between the DC poles DC+, DC-of the converter 10 from the DC system 30 provided that there is DC power available from the DC system 30. The example of Figure 3 shows two charging resistors R3, R4, which may be connected between the DC system 30 and the DC poles DC+, DC- of the converter 10 by using switch S4. Switch S4 may be an electromechanical switch or a controllable semiconductor switch, for example. As a result, the capacitive circuit C connected between the DC poles DC+, DC- of the converter 10 may be charged via the charging resistors R3, R4 before the main switch S2 between the DC system 30 and the converter 10 is closed, i.e. controlled to a conducting state. Alternatively, such a charging arrangement could be implemented even without charging resistors with a controllable semiconductor switch with which the DC charging current may be controlled, e.g. limited, with suitable switching thereof. Also other kinds of current limiting element(s) could be used in the charging arrangement. The charging arrangement may further comprise fuses F3, F4 for protection as illustrated in the example of Figure 3. The control arrangement 100 of the converter 10 may be configured to control switch S4 in order to be able to control the charging. The charging arrangement may be a separate circuit, as illustrated, or a part of the converter 10 and situated within the housing of the converter 10, for example. According to an embodiment, the charging arrangement shown in Figure 3 could be combined with the charging arrangement shown in Figure 1 or in Figure 2, for example. In such a combined solution a capacitive circuit connected to the converter 10 could be charged optionally either from the AC system 20 or from the DC system 30, for example.

According to an embodiment, a charging of a capacitive circuit C connected to the electric power converter 10 may comprise starting the charging of the capacitive circuit, detecting, during the charging, a first value of a charging current of the capacitive circuit or a quantity indicative thereof, and detecting, during the charging, a second value of the charging current of the capacitive circuit or the quantity indicative thereof, wherein the second value is detected after a predetermined period of time from the detecting of the first value. According to an embodiment the second value is then compared with the first value, and the charging of the capacitive circuit is stopped in response to the first value and the second value differing from each other by less than a predetermined current difference threshold. During a normal charging procedure, there is typically a significant difference between an initial magnitude of the charging current and the magnitude of the charging current after some time. In other words, during a normal charging procedure, the magnitude of the charging current typically starts to decrease essentially immediately as the voltage of the capacitive circuit increases. However, in case of a short circuit situation, or some other fault condition, the charging current magnitude will not decrease, or decreases more slowly than normal. Consequently, by comparing two values of the charging current recorded at different points of time, the rate of change of the charging current can be observed and thus it can be determined, if the charging proceeds normally or not. The predetermined current difference threshold may be selected according to system characteristics, for example, and may thus be based on e.g. the capacitance of the capacitive circuit to be charged and/or the maximum value of the charging current used for the charging preferably taking into account also the predetermined period of time from the detecting of the first value after which the second value is detected. According to an embodiment, the first value may be an initial value of the charging current of the capacitive circuit or the quantity indicative thereof. Instead of an initial value, the first value could also be some value detected after the initial value. The predetermined period of time from the detecting of the first value after which the second value is detected, may be selected according to system characteristics and/or according to a desired speed of operation of the detection of a possible fault condition, for example. As an example, the predetermined period of time could be some tens or some hundreds of milliseconds, e.g. about 100 to 300 ms.

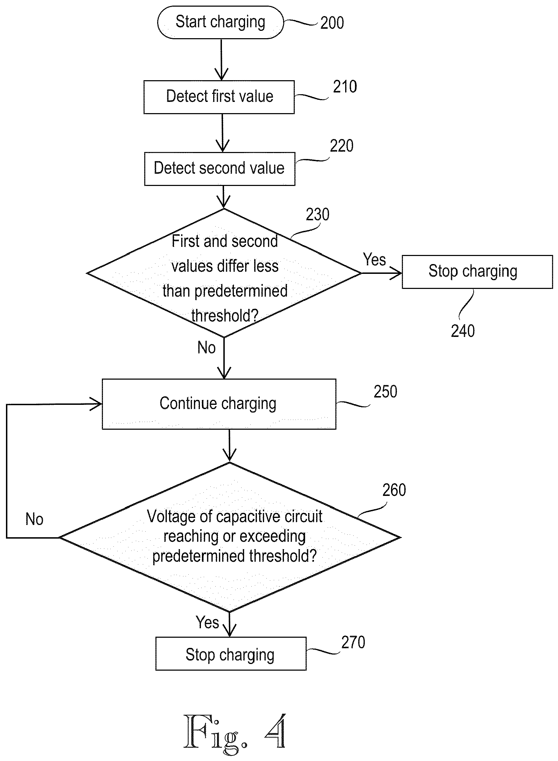

Figure 4 shows a flow chart according to an embodiment. According to the illustrated example the charging of the capacitive circuit, such as e.g. the capacitive circuit C connected between the DC poles DC+, DC- of the converter 10, is started in step 200. The charging may be performed from the AC system 20 by using the exemplary charging arrangement disclosed in Figure 1 or in Figure 2, or from the DC system 30 by using the exemplary charging arrangement disclosed in Figure 3, for example. In the exemplary configurations of Figures 1 and 2, upon starting the charging, switch S3 is closed (controlled to be conductive) while switch S1 is kept open (non-conductive), and consequently a charging current starts to flow to the capacitive circuit C from the AC system 20 through the charging arrangement. Also switch S2 may be kept open during the charging. In a corresponding manner, in the exemplary configuration of Figure 3, upon starting the charging, switch S4 is closed (controlled to be conductive) while switch S2 is kept open (non-conductive), and consequently a charging current starts to flow to the capacitive circuit C from the DC system 30 through the charging arrangement. Also switch S1 may be kept open during the charging. Then, during the charging, the first value of the charging current of the capacitive circuit C or the quantity indicative thereof is detected in step 210. Thus, it is possible to detect a value of the actual charging current, i.e. the current flowing through the capacitive circuit C, or of some other quantity indicative of the actual charging current. As an example, in the examples shown in Figures 1 and 2, such a quantity indicative of the actual charging current could be the non-rectified AC current flowing through one of the charging resistors R1, R2, for example. In case of the non-rectified AC current, the value detected could be the peak (amplitude) or peak-to-peak value of the AC current within a cycle time, for instance. Then, during the charging, the second value of the charging current of the capacitive circuit, or the quantity indicative thereof, is detected in step 220 such that the second value is detected after the predetermined period of time from the detecting of the first value. Next, the second value is compared in step 230 with the first value. The charging of the capacitive circuit is stopped in step 240 if the first value and the second value differ from each other by less than the predetermined current difference threshold. In the exemplary configurations of Figures 1 and 2, the charging can be stopped by opening switch S3, i.e. by controlling switch S3 to be non-conductive. Switch S1 may remain open in this situation. Also switch S2 may remain open in this situation. In a corresponding manner, in the exemplary configuration of Figure 3, the charging can be stopped by opening switch S4, i.e. by controlling switch S4 to be non-conductive. Switch S2 may remain open in this situation. Also switch S1 may remain open in this situation. It is further possible to signal or generally output an indication of the fault condition to a user or operator of the system in connection with step 240, for example. If the first value and the second value differ from each other by at least the predetermined current difference threshold, the charging can continue normally in step 250. According to an embodiment, during the charging, a voltage of the capacitive circuit C is monitored and compared in step 260 to a predetermined voltage threshold, and the charging of the capacitive circuit is stopped in step 270 in response to the voltage of the capacitive circuit C reaching or exceeding the predetermined voltage threshold. According to an embodiment, the predetermined voltage threshold may be selected as a normal operating state value of the voltage of the capacitive circuit C or a value lower than that, for example. As an example, the predetermined voltage threshold could be a full-wave rectified voltage of the AC system 20 or a value close to that indicating that the capacitive circuit C has been charged enough.

In the embodiments described herein, the values of e.g. the charging current of the capacitive circuit, or the quantity indicative thereof, or of the voltage of the capacitive circuit C could be detected by the converter 10, and its control arrangement 100. Additionally or alternatively, separate measuring arrangements (not shown in the figures) could be used. The detecting of a current value may comprise measuring or generally observing the value or receiving the measured value from another entity, for example. Moreover, the detecting of the current value may further comprise recording, or storing, the value such that e.g. the comparison of values detected at different points of time can be done.

According to an embodiment, the control arrangement 100 may be configured to implement the control functionality, or at least a part thereof, of the various embodiments described herein. It is also possible to use additional or separate logical or physical units (not shown in the figures) for performing the control functionality of the various embodiments described herein.

The control arrangement 100 according to any one of the embodiments, or a combination thereof, can be implemented as one unit or as two or more separate units that are configured to implement the functionality of the various embodiments. Here the term 'unit' refers generally to a physical or logical entity, such as a physical device or a part thereof or a software routine. The control arrangement 100 according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a CPU control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing the functionality of the various embodiments, or a part thereof, may further comprise suitable input means for receiving measurement and/or control data, for example, and output means for outputting control data, for example. It is also possible to use analog circuits, programmable logic devices (PLD), and/or discrete electric components and devices for implementing the functionality according to any one of the embodiments. For example, the control arrangement 100 according to any one of the embodiments may be implemented at least partly by means of such analog circuits or programmable logic devices.

The various embodiments can be implemented in existing system elements or by using separate dedicated elements or devices in a centralized or distributed manner. Present converter devices, for example, can comprise programmable logic devices, or processors and memory that can be utilized in the functions according to the embodiments. Thus, at least some modifications and configurations required for implementing an embodiment in existing converters, for example, may be performed as software routines, which may be implemented as added or updated software routines. If at least part of the functionality of an embodiment is implemented by software, such software can be provided as a computer program product comprising computer program code which, when run on a computer, causes the computer or a corresponding arrangement to perform the functionality according to the embodiment. Such a computer program code may be stored or generally embodied on a computer readable medium, such as a suitable memory, e.g. a flash memory or an optical memory, from which it is loadable to the unit or units executing the program code. In addition, such a computer program code implementing an embodiment may be loaded to the unit or units executing the computer program code via a suitable data network, for example, and it may replace or update a possibly existing program code.

It will be obvious to a person skilled in the art that, as the technology advances, the inventive concept can be implemented in various ways. The invention and its embodiments are not limited to the examples described above but may vary within the scope of the claims.

## Claims

1. A method for charging a capacitive circuit connected to an electric power converter, the method comprising:
starting (200) a charging of the capacitive circuit (C);
detecting (210), during the charging, a first value of a charging current of the capacitive circuit (C) or a quantity indicative thereof;
detecting (220), during the charging, a second value of the charging current of the capacitive circuit (C) or the quantity indicative thereof, wherein the second value is detected after a predetermined period of time from the detecting of the first value;
comparing (230) the second value with the first value; and
stopping (240) the charging of the capacitive circuit (C) in response to the first value and the second value differing from each other by less than a predetermined current difference threshold.

2. A method as claimed in claim 1, wherein the first value is an initial value of the charging current of the capacitive circuit (C) or the quantity indicative thereof.

3. A method as claimed in claim 1 or 2, wherein the electric power converter (10) is a three-phase converter.

4. A method as claimed in claim 1, 2 or 3, wherein the electric power converter (10) comprises an inverter and/or a rectifier.

5. A method as claimed in any one of claims 1 to 4, wherein the capacitive circuit (C) is connected between DC poles (DC+, DC-) of the electric power converter (10).

6. A method as claimed in any one of claims 1 to 5, wherein the charging is performed from a DC power source (30) or from an AC power source (20).

7. A method as claimed in any one of claims 1 to 6, wherein the method comprises:
monitoring (260), during the charging, a voltage of the capacitive circuit (C); and
stopping (270) the charging of the capacitive circuit (C) in response to the voltage of the capacitive circuit reaching or exceeding a predetermined voltage threshold.

8. An arrangement for charging a capacitive circuit connected to an electric power converter, the arrangement comprising:
charging means (R1, R2, S3, 40; R3, R4, S4) configured to provide a charging current to the capacitive circuit (C) during a charging of the capacitive circuit; and
control means (100) configured to:
control the charging means (R1, R2, S3, 40; R3, R4, S4) to start the charging of the capacitive circuit (C);
detect, during the charging, a first value of a charging current of the capacitive circuit (C) or a quantity indicative thereof;
detect, during the charging, a second value of the charging current of the capacitive circuit (C) or the quantity indicative thereof, wherein the second value is detected after a predetermined period of time from the detecting of the first value;
compare the second value with the first value; and
control the charging means (R1, R2, S3, 40; R3, R4, S4) to stop the charging of the capacitive circuit (C) in response to the first value and the second value differing from each other by less than a predetermined current difference threshold.

9. An arrangement as claimed in claim 8, wherein the first value is an initial value of the charging current of the capacitive circuit (C) or the quantity indicative thereof.

10. An arrangement as claimed in claim 8 or 9, wherein the electric power converter (10) is a three-phase converter.

11. An arrangement as claimed in claim 8, 9 or 10, wherein the electric power converter (10) comprises an inverter and/or a rectifier.

12. An arrangement as claimed in any one of claims 8 to 11, wherein the capacitive circuit (C) is connected between DC poles (DC+, DC-) of the electric power converter (10).

13. An arrangement as claimed in any one of claims 8 to 12, wherein the charging means are configured to provide the charging current from a DC power source (30) or from an AC power source (20).

14. An arrangement as claimed in any one of claims 8 to 13, wherein the control means (100) are configured to:
monitor, during the charging, a voltage of the capacitive circuit (C); and
control the charging means to stop the charging of the capacitive circuit in response to the voltage of the capacitive circuit (C) reaching or exceeding a predetermined voltage threshold.

15. An electric power converter comprising an arrangement as claimed in any one of claims 8 to 14.
